# EUROPEAN PATENT SPECIFICATION

(11) **EP 4 461 192 B1**
(45) Date of publication and mention of the grant of the patent: **10.12.2025**
(21) Application number: 24160463.6
(22) Date of filing: 29.02.2024
(51) Int. Cl.: A47L 15/42

(54) **A DISHWASHER COMPRISING A HEAT PUMP**
GESCHIRRSPÜLMASCHINE MIT EINER WÄRMEPUMPE
LAVE-VAISSELLE COMPRENANT UNE POMPE À CHALEUR

(30) Priority: 10.05.2023 TR 202305197
(43) Date of publication of application: 13.11.2024
(73) Proprietor: Arçelik Anonim Sirketi, 34445 Istanbul (TR)
(72) Inventor: SEREN, Erdogan Mert, 34445 Istanbul (TR); POYRAZ, Onur, 34445 Istanbul (TR); AYDINTUG, Cetin, 34445 Istanbul (TR); ASKIN, Ufuk, 34445 Istanbul (TR); BALIKCI, Ilhan, 34445 Istanbul (TR)

(56) References cited:
- EP-A1- 3 427 631
- EP-A1- 3 756 528
- WO-A1-2019/132817

## Description

The present invention relates to a dishwasher comprising a heat pump.

In dishwashers, heat pumps are used for decreasing the energy consumption and improve the drying performance. In heat pump dishwashers, the heat pump is composed of the compressor, the condenser, the throttle valve and the evaporator elements. The components of the heat pump are connected via a pipe line and the heat pump operates by means of the cycle fluid in the line. The condenser is a tube bundle having a hot surface and enables the water to be heated by being positioned in the washing water of the dishwasher. The evaporator has a cold surface and is positioned so as to contact the ambient air. The evaporator absorbs heat from the environment and provides the heat transfer to the compressor and the condenser. In this type of heat pump systems, for heating the water, the compressor is operated to enable the condenser to heat the water, and the evaporator is enabled to absorb heat from the environment to support the condenser which heats the water. The compressor pressurizes and sends the cycle fluid to the condenser. The cycle fluid passes through the condenser and reaches the evaporator. After the evaporator, the cycle fluid returns to the compressor. By sending the fluid received by the compressor to the condenser again, the cycle is completed. The water heated by the condenser is transmitted to the multiport valve. According to the algorithm-dependent position of the multiport valve, the water is transmitted to the relevant spray arm through a water line to be sprayed into the dishwasher. In the related discharge step, the water is discharged from the sump by means of the discharge pump. In order to ensure the efficient operation of the heat pump, temperature balance should be established. Therefore, fans are used to efficiently suck the ambient air and direct the same to the evaporator. In the dishwasher, generally, two fans usually positioned side by side are used. However, the operation of the fans may cause adverse effects due to the air flows . As one fan creates a flow in the opposite direction to the flow of the other fan, the air is prevented from being sucked, which decreases the efficiency of the heat pump.

In the state of the art European Patent No. EP3427628, a dishwasher is disclosed, comprising a heat pump having an air guiding duct.

In the state of the art European Patent No. EP3731720, a dishwasher is disclosed, comprising the efficiency of the heat pump system is increased.

In the state of the art European Patent No. EP3756528, a household appliance for washing articles such as dishes or pieces of silverware is disclosed, comprising a heat pump.

In the state of the art European Patent No. EP3427631, a dishwasher is disclosed, comprising a heat pump circuit with a heat exchanger which is positioned in an air duct together with a fan arrangement for generating an air flow.

The aim of the present invention is the realization of a dishwasher comprising a heat pump with increased efficiency.

The dishwasher realized in order to attain the aim of the present invention, explicated in the first claim and the respective claims thereof comprises a body; a washing tub which is disposed in the body and wherein the dishes to be washed are placed; a sump which is disposed under the washing tub and wherein the washing water is collected; at least one spraying member which ensures the performance of the washing process; a multiport valve which enables the water to be transmitted to the spraying member; and a heat pump which is disposed between the washing tub and the body. The heat pump comprises a first heat exchanger which draws heat from the environment and enables the water to be used in the washing step to be heated; a plurality of fans which draw the air from the environment to be delivered to the first heat exchanger; a second heat exchanger which transfers the heat received from the first heat exchanger to the washing tub; a capillary tube which is disposed between the first heat exchanger and the second heat exchanger; and a compressor which realizes the refrigerant cycle between the first heat exchanger and the second heat exchanger.

The dishwasher of the present invention comprises a separator which is positioned between the fans and which extends towards the sump. By means of the separator, the air flows of the fans are separated from each other, thus increasing the amount of air drawn from the environment. Since the amount of air flow delivered to the first heat exchanger increases, the efficiency of the heat pump is improved.

In an example which is not part of the present invention, the dishwasher comprises the separator in the form of a plate. By means of the plate form of the separator, the air flow between the fans is prevented, and the separator provides thermal insulation by extending towards the sump and forming partitions.

In accordance with the present invention, the dishwasher comprises the separator which has a hollow volume. Thus, it becomes possible to store water in the separator, and the environment of the heat pump is also heated by means of the heated water. Thus, the efficiency is improved.

In an embodiment of the present invention, the dishwasher comprises the separator whereon the capillary tube is disposed. Thus, the capillary tubes are fixed onto the separator, preventing noise generation.

In an embodiment of the present invention, the dishwasher comprises the separator having a plurality of air ducts arranged thereon. By means of the micro air ducts arranged on the separator, gaps are formed and sound insulation is provided.

In an embodiment of the present invention, the dishwasher comprises a plurality of heat conducting members which are disposed between the sump and the separator. Thus, heat transfer is provided between the sump and the separator, and the heat of the hot water collected in the sump is enabled to be transferred to the separator. Consequently, the temperature of the air transferred to the first heat exchanger increases, improving the efficiency.

In an embodiment of the present invention, the dishwasher comprises at least one water duct which is disposed between the sump and the separator. Thus, the separator can be used as a tank connected to the sump. Consequently, the amount of water stored is increased, improving the efficiency thanks to the accumulation of hot water.

By means of the present invention, a dishwasher is realized, comprising a heat pump having a separator which ensures the separation of the air flows generated by the fans.

A dishwasher realized in order to attain the aim of the present invention is illustrated in the attached figures, where:

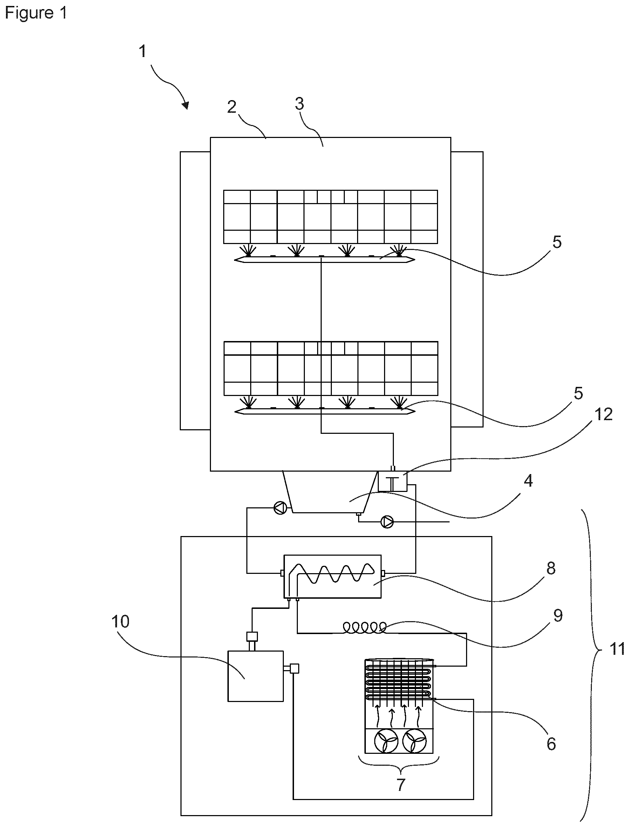

Figure 1 - is the schematic view of the dishwasher.

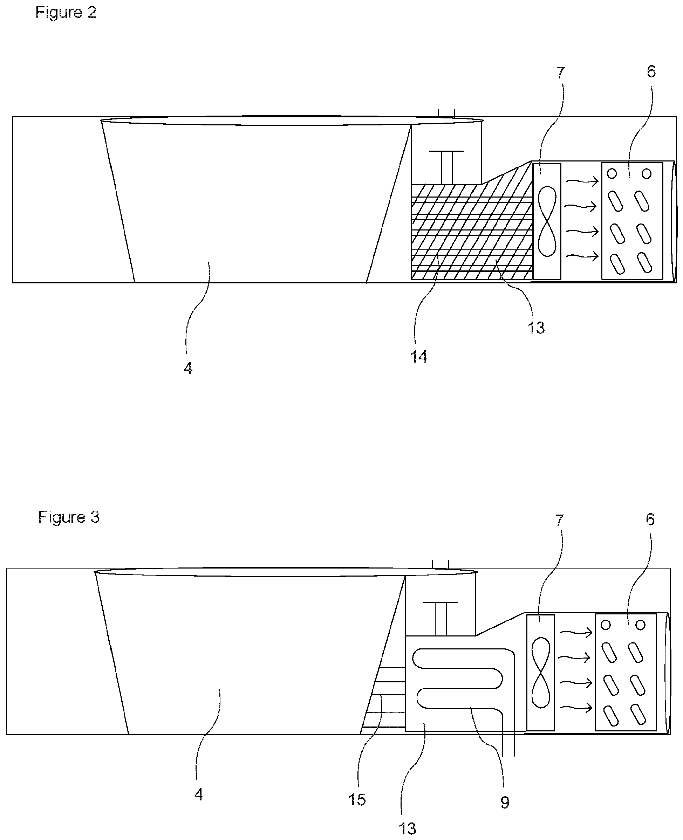

Figure 2 - is the schematic view of the separator and the air ducts.
Figure 3 - is the schematic view of the separator, the capillary tube and the heat conducting member.

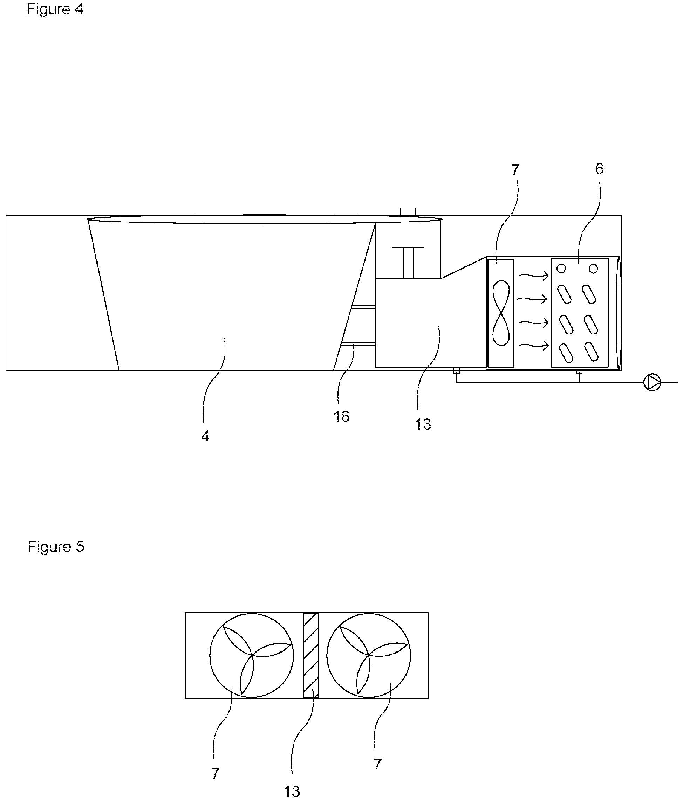

Figure 4 - is the schematic view of the separator and the water ducts.
Figure 5 - is the schematic view of the fan and the separator.

The elements illustrated in the figures are numbered as follows.
1- Dishwasher
2- Body
3- Washing tub
4- Sump
5- Spraying member
6- First heat exchanger
7- Fan
8- Second heat exchanger
9- Capillary tube
10- Compressor
11- Heat pump
12- Multiport valve
13- Separator
14- Air duct
15- Heat conducting member
16- Water duct

The dishwasher (1) comprises a body (2); a washing tub (3) which is disposed in the body (2) and wherein the washing process is performed; a sump (4) which is disposed under the washing tub (3) and wherein the water flowing down from the washing tub (3) is collected; at least one spraying member (5) which sprays water onto the kitchen items placed into the washing tub (3); a heat pump (11) which is arranged under the washing tub (3) and which has a first heat exchanger (6) which draws heat from the environment and enables the water to be used in the washing step to be heated, a plurality of fans (7) which draw the air from the environment to be delivered to the first heat exchanger (6), a second heat exchanger (8) which transfers the heat received from the first heat exchanger (6) to the washing water, a capillary tube (9) which is disposed between the first heat exchanger (6) and the second heat exchanger (8), a compressor (10) which is in fluid communication with the first the first heat exchanger (6) and the second heat exchanger (8) and which provides the refrigerant cycle; and a multiport valve (12) which enables the heated water to be delivered to the spraying members (5). The water is heated by the heat pump (11) positioned at the lower part of the dishwasher (1). The heat pump (11) is composed of the compressor (10), the second heat exchanger (8), the capillary tubes (9) and the first heat exchanger (6) which is of the air-to-air type. The compressor (10) pressurizes the refrigerant and delivers the same to the second heat exchanger (8). Upon being pressurized by the compressor (10), the pressure and the temperature of the refrigerant increase. Thus, the pipes of the second heat exchanger (8) are heated. As a result, the water in contact with the pipes of the second heat exchanger (8) is heated. The refrigerant leaving the second heat exchanger (8) is directed to the capillary tubes (9). Consequently, a significant decrease in pressure and therefore temperature thereof is observed The refrigerant leaving the capillary tubes (9) is directed to the first heat exchanger (6). The first heat exchanger (6) is of the air-to-air type. The first heat exchanger (6) is disposed in a closed volume between the fans (7) on one side and the outer environment on the other side. The air drawn from the lower section of the casing by means of the fans (7) is directed onto the first heat exchanger (6). The air passed over the first heat exchanger (6) is discharged from the rear side of the dishwasher (1).

The dishwasher (1) of the present invention comprises a separator (13) which passes between the fans (7) to extend towards the sump (4). The separator (13) is positioned between the two fans (7) and extends towards the sump (4). By means of the separator (13) disposed between the fans (7), the air flows of the fans (7) are completely separated from each other. Thus, although the fans (7) are positioned side by side, the air flows do not affect each other. Thus, ease of placement is ensured. Moreover, since the amount of sucked air increases, the efficiency of the heat pump (11) is improved.

In an example which is not part of the present invention, the dishwasher (1) comprises the separator (13) in the form of a plate. The separator (13) in the form of a plate extends towards the sump (4) between the fans (7). Thus, the air flows of the fans (7) are not mixed with each other.

In accordance with the present invention, the dishwasher (1) comprises the separator (13) which has a hollow volume. By means of the tank form of the separator (13), water can be collected therein. The collected water can be used in various cycles. Moreover, thermal gain is achieved by storing hot water and the efficiency of the heat pump (11) is improved.

In an embodiment of the present invention, the dishwasher (1) comprises the separator (13) whereon the capillary tube (9) is disposed. The capillary tubes (9) are fixed onto the separator (13). Thus, the capillary tubes (9) affected by the vibration occurring during the operation of the heat pump (11) are prevented from generating noise. Consequently, a rigid structure is obtained.

In an embodiment of the present invention, the dishwasher (1) comprises the separator (3) which provides sound insulation by means of a plurality of air ducts (14) arranged thereon. By means of the air ducts (14) arranged on the separator (13), the separator (13) can be used as an insulation member. The micro air ducts (14) ensure the sound and temperature insulation of the separator (13) to be improved.

In an embodiment of the present invention, the dishwasher (1) comprises a plurality of heat conducting members (15) which are disposed between the sump (4) and the separator (13) and which provide heat transfer. Thanks to the heat conducting members (15), one end of which is positioned on the sump (4) and the other end on the separator (13), the heat generated by the hot water collected in the sump (4) is transmitted to the separator (13). Thus, the temperature of the air delivered to the first heat exchanger (6) increases, improving the efficiency of the heat pump (11).

In an embodiment of the present invention, the dishwasher (1) comprises at least one water duct (16) which is disposed between the sump (4) and the separator (13) and which enables the water collected in the sump (4) to be delivered to the separator (13). By means of the water duct (16) disposed between the sump (4) and the separator (13), the separator (13) is used as an additional tank. Thus, the amount of water collected is increased, providing savings in water consumption. Moreover, the separator (13) is enabled to be heated with hot water, improving the efficiency of the heat pump (11).

In an alternative embodiment of the present invention, the dishwasher (1) may comprise a separate third heat exchanger. Said third heat exchanger can also be an extension of the second heat exchanger (8).

In an alternative embodiment of the present invention, the dishwasher (1) may comprise the third heat exchanger which is a water line. Preferably, the water line ensuring the flow of waste hot water can be used as the third heat exchanger.

In an alternative embodiment of the present invention, the dishwasher (1) may comprise the third heat exchanger which is an electric heater. Thus, the defrost effect is achieved.

By means of the present invention, a dishwasher is realized, wherein by means of a separator (13) disposed between the two fans (7) and extending towards the sump (4), the air flows sucked by the fans (7) are enabled to be separated from each other and the efficiency of the pump (11) is improved. Consequently, thermal and sound insulation is provided and the heat pump (11) is enabled to be operated at optimum efficiency.

## Claims

1. A dishwasher (1) **comprising** a body (2); a washing tub (3) which is disposed in the body (2) and wherein the washing process is performed; a sump (4) which is disposed under the washing tub (3) and wherein the water flowing down from the washing tub (3) is collected; at least one spraying member (5) which sprays water onto the kitchen items placed into the washing tub (3); a heat pump (11) which is arranged under the washing tub (3) and which has a first heat exchanger (6) which draws heat from the environment and enables the water to be used in the washing step to be heated, a plurality of fans (7) which draw the air from the environment to be delivered to the first heat exchanger (6), a second heat exchanger (8) which transfers the heat received from the first heat exchanger (6) to the washing water, a capillary tube (9) which is disposed between the first heat exchanger (6) and the second heat exchanger (8), a compressor (10) which is in fluid communication with the first heat exchanger (6) and the second heat exchanger (8) and which provides the refrigerant cycle; and a multiport valve (12) which enables the heated water to be delivered to the spraying members (5), **characterized by** a separator (13) which is disposed on the heat pump (11) and which passes between the fans (7) to extend towards the sump (4), wherein the separator (13) is positioned between the fans (7) and extends towards the sump (4), so that by means of the separator, the air flows of the fans (7) are completely separated from each other, and wherein the separator (13) has a hollow volume.

2. A dishwasher (1) as in claim 1, **characterized by** the separator (13) whereon the capillary tube (9) is disposed.

3. A dishwasher (1) as in any one of the above claims, **characterized by** the separator (3) which provides sound insulation by means of a plurality of air ducts (14) arranged thereon.

4. A dishwasher (1) as in any one of the above claims, **characterized by** a plurality of heat conducting members (15) which are disposed between the sump (4) and the separator (13) and which provide heat transfer.

5. A dishwasher (1) as in any one of the above claims, **characterized by** at least one water duct (16) which is disposed between the sump (4) and the separator (13) and which enables the water collected in the sump (4) to be delivered to the separator (13).

## Patentansprüche

1. Eine Geschirrspülmaschine (1) **umfasst** einen Körper (2); eine Waschwanne (3), die in dem Körper (2) angeordnet ist und in der der Waschvorgang durchgeführt wird; einen Sumpf (4), der unter der Waschwanne (3) angeordnet ist und in dem das aus der Waschwanne (3) abfließende Wasser gesammelt wird; mindestens ein Sprühelement (5), das Wasser auf die in die Waschwanne (3) versprüht; eine Wärmepumpe (11), die unter der Waschwanne (3) angeordnet ist und einen ersten Wärmetauscher (6) aufweist, der Wärme aus der Umgebung aufnimmt und das Erwärmen des im Waschschritt verwendeten Wassers ermöglicht, mehrere Ventilatoren (7), die die Luft aus der Umgebung ansaugen, um sie dem ersten Wärmetauscher (6) zuzuführen, einen zweiten Wärmetauscher (8), der die vom ersten Wärmetauscher (6) aufgenommene Wärme an das Waschwasser überträgt, ein Kapillarrohr (9), das zwischen dem ersten Wärmetauscher (6) und dem zweiten Wärmetauscher (8) angeordnet ist, einen Kompressor (10), der in Fluidverbindung mit dem ersten Wärmetauscher (6) und dem zweiten Wärmetauscher (8) steht und den Kältekreislauf bereitstellt; und ein Mehrwegeventil (12), das es ermöglicht, das erwärmte Wasser zu den Sprühelementen (5) zu leiten, **gekennzeichnet ist sie dadurch,** dass ein Trennelement (13) vorgesehen ist, das an der Wärmepumpe (11) angeordnet ist und zwischen den Ventilatoren (7) verläuft, um sich in Richtung des Sumpfes (4) zu erstrecken, wobei das Trennelement (13) zwischen den Ventilatoren (7) positioniert ist und sich in Richtung des Sumpfes (4) erstreckt, sodass mit Hilfe des Trennelements die Luftströme der Ventilatoren (7) vollständig voneinander getrennt werden, und wobei das Trennelement (13) einen Hohlraum aufweist.

2. Eine Geschirrspülmaschine (1), wie in Anspruch 1 aufgeführt, **ist dadurch gekennzeichnet, dass** der Separator (13) auf dem Kapillarrohr (9) angeordnet ist.

3. Eine Geschirrspülmaschine (1), wie in einem der vorherigen Ansprüchen aufgeführt, **ist dadurch gekennzeichnet, dass** die Waschwanne (3) eine Schalldämmung mittels einer Vielzahl von daran angeordneten Luftkanälen (14) bereitstellt.

4. Eine Geschirrspülmaschine (1), wie in einem der vorherigen Ansprüchen aufgeführt, **ist dadurch gekennzeichnet, dass** eine Vielzahl von wärmeleitenden Elementen (15) zwischen dem Sumpf (4) und dem Separator (13) angeordnet sind und die Wärmeübertragung bewirken.

5. Eine Geschirrspülmaschine (1), wie in einem der vorherigen Ansprüchen aufgeführt, **ist dadurch gekennzeichnet, dass** mindestens ein Wasserkanal (16) vorgesehen ist, der zwischen dem Sumpf (4) und dem Abscheider (13) angeordnet ist und der es ermöglicht, das im Sumpf (4) gesammelte Wasser zum Abscheider (13) zu leiten.

## Revendications

1. Un lave-vaiselle (1) **comprenant** un corps (2) ; une cuve de lavage (3) qui est disposée dans le corps (2) et dans laquelle le processus de lavage est effectué ; un bac de récupération (4) qui est disposé sous la cuve de lavage (3) et dans lequel l'eau s'écoulant de la cuve de lavage (3) est collectée ; au moins un élément de pulvérisation (5) qui projette de l'eau sur les ustensiles de cuisine placés dans la cuve de lavage (3) ; une pompe à chaleur (11) qui est disposée sous la cuve de lavage (3) et qui comprend un premier échangeur de chaleur (6) qui capte la chaleur de l'environnement et permet de chauffer l'eau destinée à être utilisée lors de l'étape de lavage, une pluralité de ventilateurs (7) qui aspirent l'air de l'environnement pour le diriger vers le premier échangeur de chaleur (6), un second échangeur de chaleur (8) qui transfère la chaleur reçue du premier échangeur de chaleur (6) à l'eau de lavage, un tube capillaire (9) disposé entre le premier échangeur de chaleur (6) et le second échangeur de chaleur (8), un compresseur (10) qui est en communication fluide avec le premier échangeur de chaleur (6) et le second échangeur de chaleur (8) et qui assure le cycle du réfrigérant ; et une vanne multipoints (12) qui permet de délivrer l'eau chauffée aux éléments de pulvérisation (5), **caractérisé par** un séparateur (13) qui est disposé sur la pompe à chaleur (11) et qui passe entre les ventilateurs (7) pour s'étendre vers le bac de récupération (4), dans lequel le séparateur (13) est positionné entre les ventilateurs (7) et s'étend vers le bac de récupération (4), de sorte que, par le biais du séparateur, les flux d'air des ventilateurs (7) sont complètement séparés les uns des autres, et dans lequel le séparateur (13) possède un volume creux.

2. Un lave-vaiselle (1) selon la Revendication 1, **caractérisé par** le séparateur (13) sur lequel est disposé le tube capillaire (9).

3. Un lave-vaiselle (1) selon l'une quelconque des Revendications précédentes, **caractérisé par** le séparateur (13) qui assure une isolation acoustique au moyen d'une pluralité de conduits d'air (14) disposés sur celui-ci.

4. Un lave-vaiselle (1) selon l'une quelconque des Revendications précédentes, **caractérisé par** une pluralité d'éléments conducteurs de chaleur (15) disposés entre le bac de récupération (4) et le séparateur (13), et assurant le transfert thermique.

5. Un lave-vaiselle (1) selon l'une quelconque des Revendications précédentes, **caractérisé par** au moins un conduit d'eau (16) disposé entre le bac de récupération (4) et le séparateur (13), et permettant à l'eau collectée dans le bac de récupération (4) d'être acheminée vers le séparateur (13).
